# EUROPEAN PATENT SPECIFICATION

(11) **EP 1 379 121 B1**
(45) Date of publication and mention of the grant of the patent: **17.08.2005**
(21) Application number: 02730551.5
(22) Date of filing: 12.04.2002
(51) Int. Cl.: A01G 9/02

(54) **BOX-TYPE POT MADE OF FIRED CLAY AND SIMILAR MATERIALS FOR OPTIMIZED STACKINGS**
KASTENFÖRMIGER PFLANZENTOPF AUS GEBRANNTEM TON UND ÄHNLICHEN MATERIALIEN ZUM BESSEREN STAPELN
POT EN FORME DE BOITE CONSTITUE D'ARGILE REFRACTAIRE ET DE MATERIAUX SIMILAIRES POUR EMPILAGES OPTIMISES

(30) Priority: 13.04.2001 IT VI20010017 U
(43) Date of publication of application: 14.01.2004
(73) Proprietor: Deroma S.p.A., 36034 Malo (Vicenza) (IT)
(72) Inventor: MASELLO, Giovanni, Franco, I-36030 San Vito Di Leguzzano (IT)
(86) International application number: PCT/IB2002/001183
(87) International publication number: WO 2002/082885

(56) References cited:
- DE-A- 2 046 325
- DE-A- 3 415 716
- DE-C- 337 386
- US-A- 1 971 075
- US-A- 3 315 410
- US-A- 3 800 469

## Description

The present invention relates to a box-type pot made of fired clay and similar materials for optimized stacking, to be use in particular, but not exclusively, for growing ornamental plants.

From prior art traditional box-type pots with an approximately rectangular plan shape are known. These pots comprise a bottom and four side walls containing the loam in which one or more plants are planted. Substantially square pots are also known, called baskets, cubes and squares consisting of a bottom and of four side containing walls. Optimization ot the storage and shipping phases is a matter of primary importance for the companies that operate in the sector. In fact, in order to minimise the costs arising from these phases the pots have to be stacked in such a manner as to make the most efficient use of the space available in the storage facilities, in the loading spaces of the vehicles and in the shipping containers. Today, this problem is partially solved. In fact, only pots having a square plan are stacked one inside the other. This system of stacking is made possible by a toot formed at the bottom and turned towards the mouth of each pot, said foot preventing the stacked pots from getting jammed into one another. Another system of stacking earthen pots one into another is disclosed for example by US 1 971 075. It teaches a frustum of cone pot provided with an inner shoulder adapted to receive and support the bottom of another pot which may be nested within the pot.

Even today, the box-type pots are stacked in superimposed pairs so that the mouths of the pots of each pair face each other. The waste of vertical space that is the method of stacking brings with it in relation to the method illustrated above is obvious.

This result in greater storage and shipping costs and therefore significantly increases the price to the public of such pots.

Furthermore, stacking one box-type pot in another is not currently practicable because the pots would tend to jam into one another, thereby greatly increasing the probability of their being broken by blows and vibrations.

The main aim of this invention is to overcome the drawbacks mentioned above that arise from the stacking of box-type pots in the known manner by making a box-type pot in fired clay and similar materials for optimised stacking in order to exploit as efficiently as possible, for example, storage facilities, containers and loading spaces of transport vehicles.

Within the scope of said aim, an object of the invention is to produce a pot at an overall lower cost than the cost of known pots, thereby significantly lowering the price to the public and simultaneously increasing the profit margin. This aim, and this object and other objects that will be better explained below, are achieved by a box-shaped pot in fired clay and similar materials for optimised stacking according to claim 1.

Further features and advantages of the invention will become apparent from the description of the embodiments shown only by way of non-limitative example in the accompanying three drawings tables, in which:
- figure 1 is a plan view from above of a first embodiment of the pot according to the invention;
- figure 2 is a section, taken along the plane II-II of figure 1, of the embodiment of the pot of the preceding figure;
- figure 3 is a plan view from above of a second embodiment of the pot according to the invention;
- figure 4 is a section, taken along the plane IV-IV of figure 3, of the embodiment of the pot of the preceding figure;
- figure 5 is a plan view from above of a second embodiment of the pot according to the invention;
- figure 6 is a section, taken along the plane VI-VI of figure 5, of the embodiment of the pot of the preceding figure;
- figure 7 is a sectioned side view of a plurality of pots according to the invention, which are stacked.

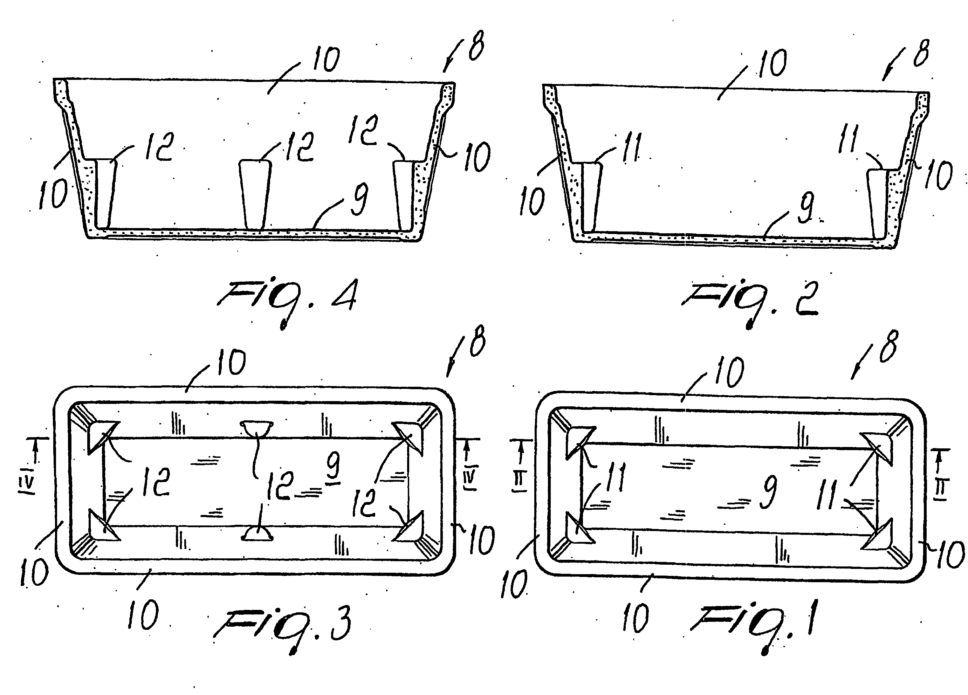

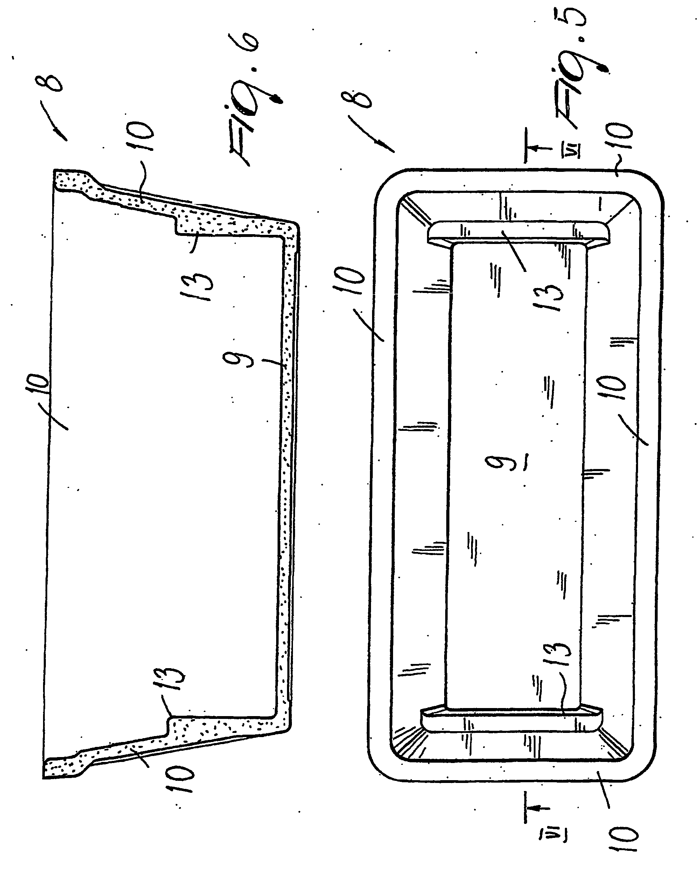

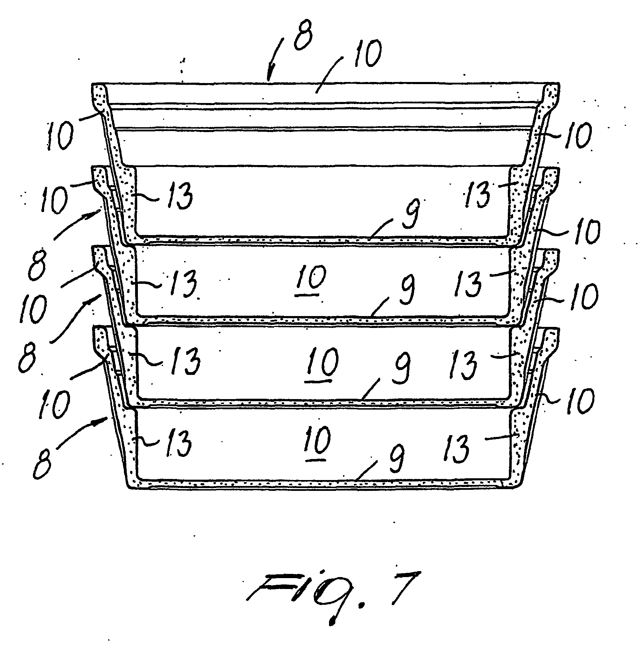

With reference to the attached drawings the embodiments of the pot 8 comprise, according to the prior art, a bottom 9 and four side walls 10 containing loam for one or more ornamental plants (not shown). The distinctive feature of the pot 8 consists in that it comprises a base that is raised with respect to the bottom 9 and is bound by the walls 10, said base acting as a rest for the bottom of another stacked pot. Said base consists of a plurality of supports obtained at the same level that protrude inside the side walls, each of which provides a flat plane facing the mouth of the pot. More specifically, in the first embodiment shown in figures 1 and 2, said base is formed by four supports 11 arranged in the internal corners formed by the walls 10. With reference to the second embodiment shown in figures 3 and 4, said base is formed by six supports 12, of which four are arranged in the internal corners formed by the walls 10 and two are approximately on the centre line of the long walls 10. With reference to the third embodiment shown in figures 5 and 6, this base consists of a pair of supports 13 arranged along the short walls 10. Figure 7 shows the manner of stacking the pots 8 obtained according to this last embodiment.

The bottom 9 of each superimposed pot 8 rests on the base formed by the flat faces of the supports 13 of each pot 8 underneath. This manner of stacking extends to the other two embodiments of the pots 8.

It has in effect been established that the pot achieves the preset aim and the preset objects inasmuch as it enables the stores, containers and loading spaces of the transport vehicles to be exploited as efficiently as possible. In addition, the pot can be made at overall costs that are lower than the costs of the known pots, which significantly reduces the sales price to the public and simultaneously increases the profit margin. It is understood that the effects of the patent extends to the embodiments described, illustrated and claimed because they achieve the same utility since they use the same innovative concept.

Any type of material and dimensions may be used in the practical embodiment, according to requirements.

## Claims

1. Box-type pot in fired clay and similar materials for optimized stacking comprising a bottom (9) and side walls (10) containing loam, a base that is raised with respect to said bottom (9) and is bounded by said walls (9) on which the bottom (9) of another stacked pot (8) rests **characterised in that** said base comprises a plurality of supports (11, 12, 13) on the same level.

2. Pot, according to claims 1, **characterised in that** said supports (11, 12, 13) protrude from the inner surface of said walls (10).

3. Pot, according to claim 1, **characterised in that** each of said supports (11, 12, 13) comprises at least one flat face facing the mouth of said pot (8).

4. Pot, according to claims 2, **characterised in that** said supports (11) are arranged at the internal edges formed by said walls (10).

5. Pot, according to claims 2, **characterised in that** said supports (11, 12) are arranged at said edges and at the centre line of the long walls.

6. Pot, according to claims 2, **characterised in that** said supports (13) are arranged along the short walls.

## Patentansprüche

1. Kastenförmiger Topf aus gebranntem Ton und ähnlichen Materialien zum optimierten Stapeln, enthaltend einen Boden (9) und lehmhaltige Seitenwände (10), und eine bezüglich des Bodens (9) erhöhte und durch die Seitenwände (10) begrenzte Basis, auf der der Boden (9) eines anderen gestapelten Topfs (8) aufliegt, **dadurch gekennzeichnet, daß** die Basis eine, Mehrzahl von auf demselben Niveau befindlichen Stützen (11, 12, 13) enthält.

2. Topf nach Anspruch 1, **dadurch gekennzeichnet, daß** die Stützen (11, 12, 13) von der Innenfläche der Seitenwände (10) vorspringen.

3. Topf nach Anspruch 1, **dadurch gekennzeichnet, daß** jede der Stützen (11, 12, 13) wenigstens eine flache, der Mündungsöffnung des Topfs (8) zugewandte Fläche aufweist.

4. Topf nach Anspruch 2, **dadurch gekennzeichnet, daß** die Stützen (11) in den von den Wänden (10) gebildeten Innenecken angeordnet sind.

5. Topf nach Anspruch 2, **dadurch gekennzeichnet, daß** die Stützen (11, 12) an diesen Ecken und an der Mittellinie der langen Wände angeordnet sind.

6. Topf nach Anspruch 2, **dadurch gekennzeichnet, daß** die Stützen (13) längs der kurzen Wände angeordnet sind.

## Revendications

1. Pot du type boîte en argile cuite et matériaux similaires, pour empilage optimisé, comportant un fond (9) et des parois latérales (10), contenant du terreau, une base qui est surélevée par rapport audit fond (9) et est délimitée par lesdites parois (10) sur laquelle vient en appui le fond (9) d'un autre pot empilé (8), **caractérisé en ce que** ladite base comporte plusieurs supports (11, 12, 13) situés au même niveau.

2. Pot selon la revendication 1, **caractérisé en ce que** lesdits supports (11, 12, 13) font saillie à partir de la surface intérieure desdites parois (10).

3. Pot selon la revendication 1, **caractérisé en ce que** chacun desdits supports (11, 12, 13) comporte au moins une face plate dirigée vers l'embouchure dudit pot (8).

4. Pot selon la revendication 2, **caractérisé en ce que** lesdits supports (11) sont agencés au niveau des bords intérieurs formés par lesdites parois (10).

5. Pot selon la revendication 2, **caractérisé en ce que** lesdits supports (11, 12) sont agencés au niveau desdits bords et au niveau de l'axe central des parois longues.

6. Pot selon la revendication 2, **caractérisé en ce que** lesdits supports (13) sont agencés le long des parois courtes.
